# EUROPÄISCHE PATENTANMELDUNG

(11) **EP 4 297 203 A1**
(43) Veröffentlichungstag der Anmeldung: **27.12.2023**
(21) Anmeldenummer: 22180740.7
(22) Anmeldetag: 23.06.2022
(51) Int. Cl.: H01R 43/28, B25J 15/00, H02G 1/00, H01R 43/052, H01R 43/05

(54) **KABELBEARBEITUNGSEINRICHTUNG UND VERFAHREN ZUM EINRICHTEN EINER KABELBEARBEITUNGSEINRICHTUNG**

(71) Anmelder: komax Holding AG, 6036 Dierikon (CH)
(72) Erfinder: Viviroli, Stefan, 6048 Horw (CH); Schnellmann, Chris, 5643 Sins (CH)
(74) Vertreter: Inventio AG

(57) **Zusammenfassung**

Eine Kabelbearbeitungseinrichtung (1) zum Konfektionieren von Kabeln weist Bearbeitungsstationen (2, 3, 4), eine einen Kabelgreifer (6) umfassende Zuführeinheit (5) und eine Maschinensteuerung (8) auf. Die Zuführeinheit (5) ist derart eingerichtet, dass der Kabelgreifer (6) in einem Einrichtmodus manuell zu einer der Bearbeitungsstationen (2, 3, 4) in eine gewünschte Position bewegbar ist. Nachdem die gewünschte Position erstellt worden ist, wird diese Position in der Maschinensteuerung (8) gespeichert, so dass danach im Normalbetriebsmodus der Kabelgreifer (6) automatisch in diese Position gebracht werden kann. Zum Bewegen des Kabelgreifers (6) im Normalbetriebsmodus weist die Zuführeinheit (5) mit Encodern ausgerüstete Servo- oder Schrittmotoren (14, 15) auf. Die Kabelbearbeitungseinrichtung (1) weist weiter eine Schutzhaube (9) auf. Die Maschinensteuerung (8) ist derart ausgestaltet, dass, wenn die Schutzhaube (9) in der offenen Stellung und im Einrichtmodus ist, sie die Aktoren zum Betreiben der Bearbeitungsstationen (2, 3, 4) und der Zuführeinheit (5) stromlos schaltet.

## Beschreibung

Die Erfindung betrifft eine Kabelbearbeitungseinrichtung zum Konfektionieren von Kabeln gemäss dem Oberbegriff von Anspruch 1. Weiterhin betrifft die Erfindung ein Verfahren zum Einrichten einer solchen Kabelbearbeitungseinrichtung.

Bei der Konfektionierung von Kabeln werden Kabelenden der Kabel gecrimpt oder auf andere Weise bearbeitet. Unter "Crimpen" versteht man die Herstellung einer nicht lösbaren elektrischen und mechanischen Verbindung (Crimpverbindung) durch plastische Deformation zwischen einem Leiter und einem Crimpkontakt. Für höhere Anforderung hinsichtlich Dichtheit können die absiolierten Kabelenden vor dem Crimpen in Tüllenstationen mit Tüllen bestückt werden.

Eine gattungsmässig vergleichbare Kabelbearbeitungseinrichtung ist aus der EP 1 447 888 A1 bekannt geworden. Die EP 1 447 888 A1 zeigt eine Kabelbearbeitungseinrichtung mit einer Abisoliereinheit und zwei Crimpstationen mit Crimppressen. Die Vorrichtung verfügt weiter über einen als Bandantrieb ausgebildeten Kabelvorschub zum Bewegen des Kabels entlang einer Maschinenlängsachse. Die Abisoliereinheit zum Ablängen und Abisolieren der Kabelenden ist auf der Maschinenlängsachse angeordnet. Da sich die beiden Crimpstationen jedoch neben der Maschinenlängsachse befinden, muss das Kabel mittels mit Greifern versehenen Schwenkarmen von Schwenkeinheiten zu den jeweiligen Crimppressen der Crimpstationen geführt werden, weshalb dieser Typ von Kabelbearbeitungseinrichtungen dem Fachmann auch unter der Bezeichnung "Schwenkmaschinen" bekannt und geläufig ist. Die den Kabelgreifer umfassende Zuführeinheit ist dabei eine sogenannte "Schwenkeinheit". In der ersten Crimpstation wird dabei das voreilende Kabelende und mit der zweiten Crimpstation das nacheilende Kabelende mit Crimpkontakten bestückt. Über eine Maschinensteuerung und eine zentrale Bedieneinheit lässt sich die Kabelbearbeitungseinrichtung überwachen und steuern.

Die bekannten Kabelbearbeitungseinrichtungen haben sich in Bezug auf den Produktionsbetrieb bewährt. Prozessparameter lassen sich mit der Maschinensteuerung und der zentralen Bedieneinheit vergleichsweise einfach überwachen und anpassen. Vor der massenweisen Fertigung konfektionierter Kabel müssen die einzelnen Bearbeitungsstationen jedoch eingerichtet werden. Je nach zu verarbeitenden Kabeln, Crimpkontakten und/oder Tüllen müssen Maschineneinstellungen an die unterschiedlichen Anforderungen angepasst werden. Dieser Einrichtprozess ist insbesondere in Bezug auf die Crimpstationen besonders wichtig, da die zu verarbeitenden Kabelenden möglichst präzise im Crimpwerkzeug einer Crimppresse der Crimpstation positioniert sein müssen. Das Einrichten kann auch nach einem Wechsel des Crimpwerkzeugs nötig sein.

Bekannt sind Kabelbearbeitungseinrichtungen, bei denen der Einrichtprozess von einer zentralen Bedienkonsole der Maschine aus vorgenommen wird. Beispielsweise für das Crimpen bedient der Benutzer oder Maschinenbediener die Bedienkonsole im Einzelschrittbetrieb zum Positionieren des Kabelgreifers relativ zur Crimpstation. Der Benutzer muss sich dabei oft zwischen der Bedienkonsole und den Bearbeitungsstationen hin- und herbewegen, um den Fortschritt visuell zu prüfen. Aus der EP 3 024 099 A1 ist eine Kabelbearbeitungseinrichtung bekannt geworden, bei der einzelne Bearbeitungsstationen mit Bedieneinheiten versehen sind. Mittels dieser Bedieneinheiten können die jeweiligen Bearbeitungsstationen lokal eingerichtet werden. Für die Personensicherheit weist die Kabelbearbeitungseinrichtungen eine Schutzhaube auf, wobei das Einrichten allerdings bei offener Schutzhaube durchgeführt werden muss.

Es ist deshalb eine Aufgabe der vorliegenden Erfindung, die Nachteile des Bekannten zu vermeiden und insbesondere eine Kabelbearbeitungseinrichtung zu schaffen, die im Hinblick auf das Einrichten der Kabelbearbeitungseinrichtung einfach und sicher zu bedienen ist.

Erfindungsgemäss wird diese Aufgabe mit einer Kabelbearbeitungseinrichtung mit den Merkmalen des Anspruchs 1 gelöst. Die Kabelbearbeitungseinrichtung dient zur Konfektionierung von Kabeln und umfasst eine oder mehrere Bearbeitungsstationen zum Bearbeiten von Kabelenden der Kabel. Als Bearbeitungsstationen kommen beispielsweise Abisolierstationen, Tüllenstationen und Crimpstationen in Frage. Die Kabelbearbeitungseinrichtung weist weiter eine einen Kabelgreifer umfassenden Zuführeinheit zum Zuführen eines Kabelendes des Kabels zu wenigstens einer der Bearbeitungsstationen und eine Maschinensteuerung zum Steuern der Kabelbearbeitungseinrichtung auf. Dadurch, dass die Zuführeinheit derart eingerichtet ist, dass der Kabelgreifer in einem Einrichtmodus manuell wenigstens zu einer der Bearbeitungsstationen, beispielswiese zu einer Crimpstation, in eine gewünschte Position bewegbar ist und dass die Maschinensteuerung derart ausgestaltet ist, dass nachdem die gewünschte Position manuell erstellt worden ist, diese Position bzw. eine dazugehörige Steuergrösse in der Maschinensteuerung abspeicherbar ist oder abgespeichert wird, so dass danach im Normalbetriebsmodus der Kabelgreifer automatisch in diese Position gebracht werden kann oder gebracht oder verfahren wird, wird im Hinblick auf das Einrichten eine vorteilhafte Kabelbearbeitungseinrichtung geschaffen. Die Kabelbearbeitungseinrichtung kann effizient und dennoch sicher eigerichtet werden. Fehlerhafte Maschineneinstellungen können dank der intuitiven Benutzerführung zum Einrichten praktisch ausgeschlossen werden. Das Einrichten der Kabelbearbeitungseinrichtung ist auch von Personen mit geringem Ausbildungsgrad oder nach kurzer Anlernzeit einfach und zuverlässig durchführbar. Unter Einrichten wird vorliegend das initiale Einstellen von Parametern einer jeweiligen Bearbeitungsstation zum Bearbeiten von Kabelenden von Kabeln vor Beginn des Produktionsprozesses zur massenweisen Produktion von konfektionierten Kabelenden verstanden. Es geht mit anderen Worten um ein Neueinstellen, Korrigieren oder Ändern von Parametern, bevor der Produktionsprozess gestartet wird. Beim Einrichten kann unter anderem eingestellt werden, dass der Kabelgreifer in einem dem Produktionsprozess zugeordneten Normalbetriebsmodus in die richtige Position beispielsweise zur Crimpstation oder zu einer anderen Bearbeitungsstation fährt. Nachfolgend steht dieser Aspekt des Einrichtens, also die Positionierung des Kabelgreifers im Vordergrund. Der Einrichtmodus ist der Modus, in der ein Einrichtvorgang durchgeführt wird, bei dem Positionen des Kabelgreifers in Bezug auf eine Bearbeitungsstation geändert und eingestellt werden können. Wenn die Kabelbearbeitungseinrichtung mehrere Bearbeitungsstationen und insbesondere mehrere Bearbeitungsstationen derselben Gattung (z.B. Crimpstationen) umfasst, sind in der Regel entsprechend mehrere Einrichtvorgänge durchzuführen.

Die Position, in die der Kabelgreifer manuell bewegt werden muss, entspricht am Beispiel der Crimpstation einer Ausgangsstellung des Kabelgreifers zu Beginn des eigentlichen Crimpvorgangs in der Crimpstation (oder eines anderen Bearbeitungsvorgangs in einer Bearbeitungsstation). Zum Beispiel befindet sich das vom Kabelgreifer gehaltene Kabelende in der erwähnten Position in einer Crimppresse der Crimpstation und vorzugsweise zwischen den beiden Crimpwerkzeugen (Amboss, Crimpstempel). Das Kabelende befindet sich in nun der gewünschten bzw. richtigen Position, von der aus (darum Ausgangsposition) die Crimpwerkzeuge aufeinander zu bewegt und geschlossen werden, wodurch der Crimpkontakt auf das Kabelende aufgebracht wird.

Die Zuführeinheit der Kabelbearbeitungseinrichtung kann für das manuelle Bewegen des Kabelgreifers in die gewünschte Position bevorzugt derart ausgeführt sein, dass sie einhändig von einer Person bedient werden kann. Der Einrichtvorgang wird bevorzugt mit einem ein Kabel haltenden Kabelgreifer durchgeführt. Auf diese Weise kann die Position des Kabelgreifers und damit die Position des vom Kabelgreifer gehaltenen Kabelendes vom Benutzer erkannt werden, ob die durch das manuelle Bewegen erreichte Position der gewünschten bzw. richtigen Position entspricht. Sobald dies der Fall ist, kann der Benutzer den Kabelgreifer loslassen und die Hand kann aus dem Gefahrenbereich herausgenommen werden.

Zum manuellen Bewegen des Kabelgreifers ergreift die betreffende Person den Kabelgreifer oder einen anderen Bereich der Zuführeinheit mit seiner Hand oder gegebenenfalls auch mit zwei Händen. Wenn die Zuführeinheit eine Vorderseite, die beispielsweise durch einen Greiferkopf mit Greiferbacken vorgegegeben ist, aufweist, kann es vorteilhaft sein, wenn die Person wenigstens in einer Endphase des manuellen Bewegens die Zuführeinheit vorderseitig hält, wodurch ein präzises Positionieren erleichtert ist. Die Zuführeinheit kann aber auch andere Bereiche aufweisen, die zum manuellen Bewegen des Kabelgreifers ergriffen werden können, aufweisen. Diese hinteren oder rückseitigen Bereiche können in einer ersten Bewegungsphase zum Erstellen der gewünschten Position ergriffen und zum manuellen Bewegen gehalten werden.

In einer Ausführungsform kann die Zuführeinheit der Kabelbearbeitungseinrichtung zum Bewegen des Kabelgreifers im Normalbetriebsmodus mit Encodern ausgerüstete Servo- oder Schrittmotoren aufweisen, mittels welcher Motoren der Kabelgreifer wenigstens zu einer der Bearbeitungsstationen bewegbar ist. Die Encoder sind dabei derart mit der Maschinensteuerung verbunden und die Maschinensteuerung konfiguriert, dass mittels der Encoder die Position des Kabelgreifers nach dem manuellen Bewegen im Einrichtmodus ermittelbar ist oder ermittelt und abgespeichert wird.

Aus sicherheitstechnischer Hinsicht kann es vorteilhaft sein, wenn die Kabelbearbeitungseinrichtung eine zwischen einer geschlossenen Stellung und einer offenen Stellung bewegbaren Schutzhaube aufweist. Die Schutzhaube deckt dabei in der geschlossenen Stellung die wenigstens eine Bearbeitungsstation und die Zuführeinheit mit dem Kabelgreifer ab; die Schutzhaube schafft in der offenen Stellung einen Freiraum, über den die wenigstens eine Bearbeitungsstation und die Zuführeinheit für manuelle Interaktionen zum Bewegen des Kabelgreifers zugänglich ist. In dieser offenen Stellung kann die Kabelbearbeitungseinrichtung sich im Einrichtmodus befinden. Die Maschinensteuerung kann derart ausgestaltet sein, dass, wenn die Schutzhaube in der offenen Stellung und somit im Einrichtmodus ist, die wenigstens eine Bearbeitungsstation, bevorzugt alle kritischen und besonders bevorzugt alle Bearbeitungsstationen der Kabelbearbeitungseinrichtung und die Zuführeinheit deaktiviert sind und sie keinen Bearbeitungsvorgang oder sonstige maschinelle Bewegungen zulassen. Verletzungen der Hand der Person durch sich bewegende Teile können so ausgeschlossen werden. Ein weiterer Vorteil dieser Anordnung besteht darin, dass bei offener Schutzhaube auch weitere Personen gefahrlos an der Kabelbearbeitungseinrichtung arbeiten könnten.

Die Maschinensteuerung kann derart ausgestaltet sein, dass, wenn die Schutzhaube in der offenen Stellung und somit im Einrichtmodus ist, die Maschinensteuerung die elektromotorischen Aktoren (z.B. Servo- oder Schrittmotoren) zum Betreiben der wenigstens einen Bearbeitungsstation und/oder der Zuführeinheit stromlos schaltet. Somit kann der Kabelgreifer gefahrlos manuell in die gewünschte Position bewegt werden. Wenn Servo- oder Schrittmotoren als Aktoren zum Betreiben der Zuführeinheit und gegebenenfalls einzelner oder aller Bearbeitungsstationen vorhanden sind, können diese beispielsweise bei Erstellen der Offenstellung oder auf andere Weise stromlos geschaltet werden, so dass auch bei unbeabsichtigter oder irrtümlicher Betätigung von Knöpfen oder Schaltern sichergestellt ist, dass keine maschinelle Bewegungen von Teilen der Kabelbearbeitungseinrichtung, und insbesondere nicht die betreffenden, gerade einzurichtenden Komponenten der Kabelbearbeitungseinrichtung stattfinden und den Nutzer gefährden kann. Durch das Stromlosschalten können die Servo- oder Schrittmotoren zum Bewegen des Kabelgreifers auf vorteilhafte Weise in einen Zustand versetzt werden, in der die Servo- oder Schrittmotoren inaktiv sind und gleichzeitig jedoch die Encoder nach wie vor funktionieren, und nach Beendigung des stromlosen Zustands die Encoder die Positionsdaten der Maschinensteuerung melden können oder von dieser abrufbar sind.

Die Maschinensteuerung kann weiter derart konfiguriert sein, dass die Zuführeinheit mit dem Kabelgreifer und die einzurichtende Bearbeitungsstation der Kabelbearbeitungseinrichtung in einen Testmodus versetzt werden kann. Es kann ein Testmodus vorgesehen sein, bei dem bei geschlossener Schutzhaube ein einzelner Bearbeitungsschritt (z.B. Crimpen eines Kabelendes) testweise durchgeführt wird. Im Testmodus erfolgen die Bewegungen der beteiligten Komponenten der Kabelbearbeitungseinrichtung bevorzugt verlangsamt bzw. in einem Kriechgang, z.B. halbe Geschwindigkeit. Im Testmodus wird bevorzugt nur der jeweilige Bearbeitungsschritt durchgeführt. Der Testmodus erlaubt ein einfaches Beobachten des Bearbeitungsschrittes. Nach dem testweise durchgeführten Bearbeitungsschritt kann die Schutz-haube wieder geöffnet werden. Wenn die Schutzhaube sich in offener Stellung befindet und damit der im Einrichtmodus erstellt ist, kann der Kabel-greifer wiederum manuell bewegt werden, nun jedoch in eine Beobachtungsposition zum Benutzer hin, so dass das Kabelende sich in seiner Nähe befindet und gut für den Benutzer einsehbar ist, sodass es visuell prüfen kann, wie der vorgängig durchgeführte Test abgelaufen ist. Wenn die visuelle Prüfung ein positives Ergebnis ergibt, ist der Einrichtvorgang wenigstens in Bezug auf die jeweilige Bearbeitungsstation im Wesentlichen abgeschlossen. Bei negativem Ergebnis, also wenn die visuelle Prüfung des Kabelndes ein qualitativ unzureichendes Ergebnis ergibt, muss der vorgängig beschriebene Einrichtvorgang wiederholt werden.

Vorteilhaft kann es sein, wenn die Kabelbearbeitungseinrichtung eine Bedieneinheit mit einer Haubentaste zum Bedienen der Schutzhaube umfasst, wobei die Haubentaste derart mit der Maschinensteuerung verbunden ist, dass bei oder nach Betätigung der Haubentaste zum Erstellen der offenen Stellung der Schutzhaube der Einrichtmodus automatisch erstellbar ist. Mittels der Haubentaste kann die Kabelbearbeitungseinrichtung auf einfache Weise in den Einrichtmodus versetzt werden. Denkbar wäre alternativ auch ein separates Eingabemittel, z.B. eine spezielle hierfür vorgesehene Taste oder Schalter, mit dem der Einrichtmodus erstellbar ist.

Die Haubentaste zum Bedienen der Schutzhaube kann eine gemeinsame Taste sowohl zum Öffnen als auch zum Schliessen sein, je nachdem in welcher Lage sich die Schutzhaube gerade befindet, d.h. wenn die Schutzhaube sich in der geschlossenen Stellung befindet, wird nach Betätigung der Haubentaste die Schutzhaube in die offene Stellung gebracht; und umgekehrt wenn die Schutzhaube sich in der offene Stellung befindet, wird nach Betätigung der Haubentaste die Schutzhaube in geschlossene die Stellung gebracht.

Vorstellbar ist weiter eine spezielle Taste, mittels der alleine die Schutzhaube nur in die offene Stellung überführbar ist («Haube öffnen-Taste»). Die Haubentaste kann auch derart ausgestaltet und in der Maschinensteuerung eingebunden sein, dass mit ihr der Wunsch die Schutzhaube zu öffnen oder zu schliessen der Maschinensteuerung mitteilbar ist.

Die Kabelbearbeitungseinrichtung kann eine Bedieneinheit mit einer Haubentaste zum Bedienen der Schutzhaube umfassen, wobei die Haubentaste derart mit der Maschinensteuerung verbunden ist, dass bei oder nach Betätigung der Haubentaste die Schutzhaube automatisch die geschlossene Stellung erstellbar ist. Diese Haubentaste ist bevorzugt dieselbe Taste wie die vorerwähnte Haubentaste, mit der bei oder nach Betätigung der Haubentaste die offenen Stellung der Schutzhaube automatisch erstellt werden kann und vorteilhaft die Kabelbearbeitungseinrichtung in den Einrichtmodus versetzt werden kann. Die Bedieneinheit kann neben der Haubentaste eine weitere Taste aufweisen, mit der bestätigbar ist, dass die Schutzhaube von der offenen Stellung in die geschlossene Stellung gebracht werden soll. Nachfolgend wird zum besseren Verständnis diese weitere Taste der Einfachheit halber auch als «Haube schliessen-Taste» bezeichnet. Ein Betätigen der Haubentaste kann somit nur mittelbar - d.h. in Kombination mit der erwähnten Haube schliessen-Taste - ein automatisches Bewegen der Schutzhaube von der offenen Stellung in die geschlossene Stellung auslösen, wodurch die Sicherheit für den Benutzer weiter erhöht wird.

Besonders bevorzugt sind die Haubentaste und die Taste zum Bestätigen des Haubenschliessvorgangs (Haube schliessen-Taste) derart mit der Maschinensteuerung verbunden und die Maschinensteuerung ist konfiguriert, dass nur bei gleichzeitigem Drücken beider Tasten die Schutzhaube von der offenen Stellung in die geschlossene Stellung gebracht werden kann. Vorzugsweise sind dabei die Haubentaste und die Taste zum Bestätigen des Haubenschliessvorgangs für die Zweihandbedienung ausgestaltet und hierzu um beispielsweise wenigstens 27 cm voneinander entfernt. Mit dieser Anordnung kann sichergestellt werden, dass keine Hand des Benutzers bei geschlossener Schutzhaube im Gefahrenbereich verbleiben kann. Durch eine örtliche Trennung der beiden Tasten wird erreicht, dass eine einhändige Bedienung im Hinblick auf das Auslösen des Schliessvorgangs für die Schutzhaube verhindert ist.

In einer bevorzugten Ausführungsform weist die Kabelbearbeitungseinrichtung eine Bedieneinheit mit einer Speichertaste zum Speichern der nach dem manuellen Bewegen erreichten Position des Kabelgreifers auf. Die Speichertaste kann als duktile Taste ausgestaltet sein, auch eine virtuelle Taste eines berührungssensitiven Bedienpanels ist denkbar. Selbstverständlich könnten zum Abspeichern auch andere Eingabemittel vorgesehen werden, mittels der Maschinensteuerung der Befehl zum Abspeichern der Position des Kabelgreifers mitgeteilt werden kann. Zum Beispiel kann die Bedieneinheit) der Kabelbearbeitungseinrichtung eine Haubentaste und ggf. zusätzlich oder alternativ eine Haube schliessen-Taste aufweisen und dass bei vorzugsweise gleichzeitigen Betätigen der Haube schliessen-Taste bestätigt wird, dass der jeweilige Einrichtvorgang, bei dem die gewünschte bzw. richtige Position des Kabelgreifers festgelegt wird, abgeschlossen ist und dass die momentane Position des Kabelgreifers abgespeichert wird.

Diese Speichertaste kann derart in der Kabelbearbeitungseinrichtung und vorzugsweise ausserhalb der Schutzhaube angeordnet sein, dass der Benutzer mit einer Hand die Zuführeinheit mit dem Kabelgreifer halten kann und mit der anderen Hand die Speichertaste zum Speichern der momentanen Position des Kabelgreifers betätigen kann.

Die oben erwähnte Speichertaste kann vorzugsweise derselben Bedieneinheit zugeordnet sein, die die Haubentaste und die gegebenenfalls die Taste zum Bestätigen des Haubenschliessvorgangs sowie weiter gegebenenfalls weitere Tasten umfasst.

Die Kabelbearbeitungseinrichtung kann mehrere jeweils eine Speichertaste umfassende Bedieneinheiten umfassen. Mit mehreren Bedieneinheiten kann gewährleistet werden, dass mehrere Bearbeitungsstationen der Kabelbearbeitungseinrichtung einfach eingerichtet werden können. Jede der Bedieneinheiten kann jeweils eine Speichertaste, eine Haubentaste und gegebenenfalls eine Taste zum Bestätigen des Haubenschliessvorgangs umfassen.

Zum Beispiel kann die Kabelbearbeitungseinrichtung zwei Gruppen von Bearbeitungsstationen umfassen, wobei eine erste Gruppe einem vorauseilenden und eine zweite Gruppe einem nacheilenden Kabelende des Kabels zugeordnet sind, wobei jeder der beiden Gruppen je wenigstens eine Bedieneinheit zugeordnet ist. Sie kann zwei Bedieneinheiten aufweisen, die in Bezug auf eine Maschinenlängsachse auf einander gegenüberliegenden Seiten der Kabelbearbeitungseinrichtung angeordnet sind.

Die Kabelbearbeitungseinrichtung kann beispielsweise als Bearbeitungsstation eine Crimpstation umfassen, zu der der Kabelgreifer im Einrichtmodus manuell bewegbar ist. Die Zuführeinheit mit dem Kabelgreifer kann beispielsweise als Schwenkeinheit ausgestaltet sein.

Ein weiterer Aspekt der Erfindung betrifft ein Verfahren zum Einrichten einer Kabelbearbeitungseinrichtung zum Konfektionieren von Kabeln mit wenigstens einer Bearbeitungsstation und einer einen Kabelgreifer umfassenden Zuführeinheit zum Zuführen eines Kabelendes des Kabels zur wenigstens einen Bearbeitungsstationen und insbesondere der vorgängig beschriebenen Kabelbearbeitungseinrichtung. Das Verfahren umfasst folgende Schritte: Zuerst wird die Kabelbearbeitungseinrichtung in einen Einrichtmodus versetzt, in welchem Einrichtmodus vorzugsweise die Zuführeinheit und die wenigstens eine Bearbeitungsstation deaktiviert sind und kein Bearbeitungsvorgang zulassen. Danach kann der Benutzer die Zuführeinheit mit einer Hand ergreifen. Er bewegt die Zuführeinheit mit dem Kabelgreifer manuell bis der Kabelgreifer eine gewünschte Position in der Bearbeitungsstation erreicht. Dann wird die Position des Kabelgreifers vorzugsweise in einer Maschinensteuerung abgespeichert, wobei die abgespeicherte Position von der Maschinensteuerung für einen Normalbetriebsmodus verwendet wird, in welchem der Kabelgreifer automatisch zur Bearbeitungsstation in die abgespeicherte Position verfahren wird. Das neuartige Verfahren zum Einrichten der Kabelbearbeitungseinrichtung erfolgt dabei nach einem vorteilhaften Teach-In Prozedere, das einfach und auf intuitive Weise durchgeführt werden kann.

Nach dem Abspeichern der Position des Kabelgreifers kann testweise ein einzelner Bearbeitungsvorgang in Bezug auf die jeweilige Bearbeitungsstation durchgeführt werden und das so testweise bearbeitete Kabelende des Kabels wird visuell geprüft, indem die Zuführeinheit mit dem Kabelgreifer manuell, d.h. durch Ergreifen mit der Hand und Bewegen (Ziehen, Stossen, Verschwenken, Absenken) zum Benutzer hin bewegt wird. Die letztgenannte manuelle Bewegung kann vorteilhaft ebenfalls in einem Modus, in dem die Zuführeinheit und die wenigstens eine Bearbeitungsstation deaktiviert sind und kein Bearbeitungsvorgang zulassen, vorgenommen werden.

Die obigen Einrichtvorgänge können, wenn die Kabelbearbeitungseinrichtung mehrere Bearbeitungsstationen umfasst, an einer oder mehreren weiteren Bearbeitungsstationen auf analoge Weise durchgeführt werden.

Die Kabelbearbeitungseinrichtung wird vorzugsweise beim Öffnen einer die die wenigstens eine Bearbeitungsstation und die Zuführeinheit mit dem Kabelgreifer abdeckenden Schutzhaube in den Einrichtmodus oder in einen Modus, in dem die Zuführeinheit und die wenigstens eine Bearbeitungsstation deaktiviert sind und kein Bearbeitungsvorgang zulassen, versetzt. Auf diese Weise können Unfälle mit Personen praktisch ausgeschlossen werden.

Weitere Einzelmerkmale und Vorteile der Erfindung ergeben sich aus der nachfolgenden Beschreibung von Ausführungsbeispielen und aus den Zeichnungen. Es zeigen:
- Figur 1:: eine Draufsicht auf eine Kabelbearbeitungseinrichtung,
- Figur 2:: eine perspektivische Darstellung einer Zuführeinheit der Kabelbearbeitungseinrichtung aus Fig. 1,
- Figur 3:: eine Bedieneinheit der Kabelbearbeitungseinrichtung aus Fig. 1,
- Figur 4:: eine perspektivische Darstellung der Kabelbearbeitungseinrichtung gemäss Fig. 1 mit geschlossener Schutzhaube,
- Figur 5:: die Kabelbearbeitungseinrichtung mit offener Schutzhaube, und

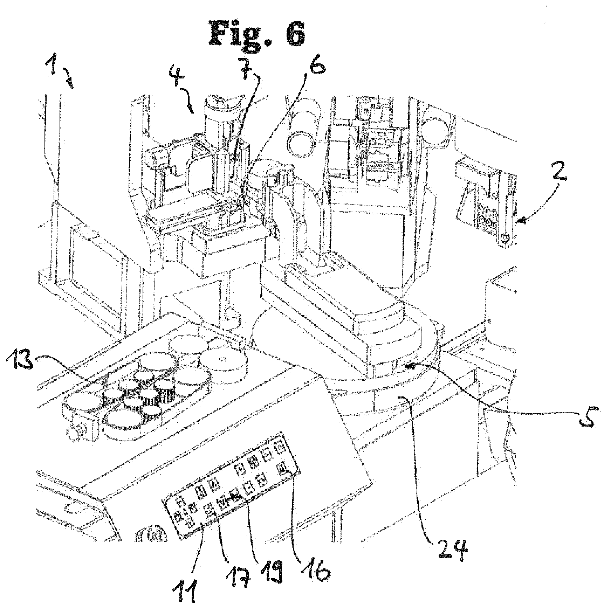

- Figur 6:: eine vergrösserte Ansicht auf die Kabelbearbeitungseinrichtung gemäss Fig. 1 in einer perspektivischen Darstellung.

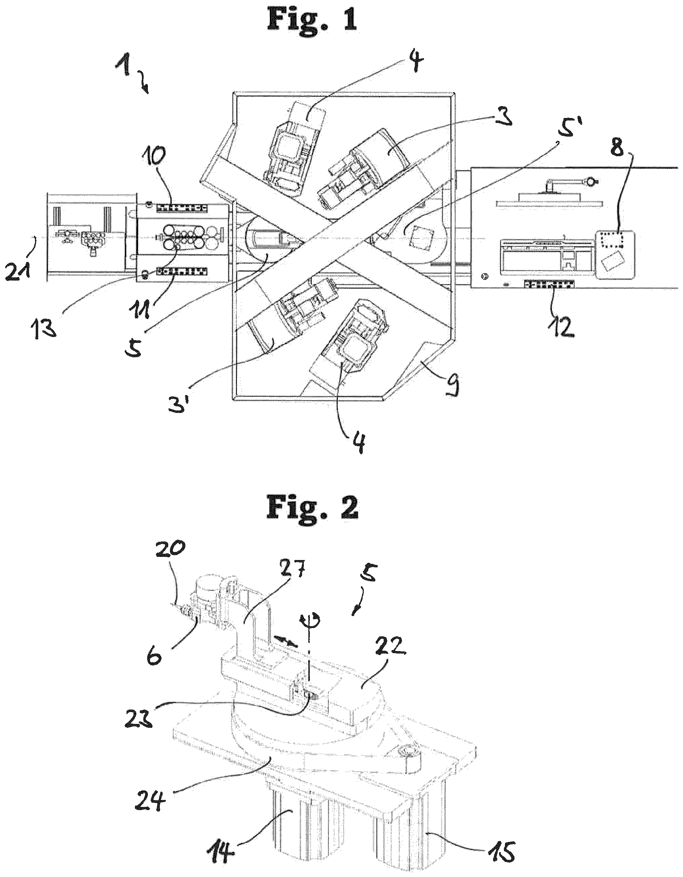

Figur 1 zeigt eine insgesamt mit 1 bezeichnete, als Schwenkmaschine ausgeführte Kabelbearbeitungseinrichtung zum Konfektionieren von (hier nicht dargestellten) Kabeln. Die Kabelbearbeitungseinrichtung 1 umfasst ein als Bandförderer ausgestaltetes Kabelfördermittel 13, welches die Kabel entlang der Maschinenlängsachse 21 zur als Schwenkeinheit ausgeführten Zuführeinheit 5 bringt. Die Schwenkeinheit 5 verfügt über einen (durch eine Schutzhaube 9 abgedeckten und darum hier nicht dargestellten) Kabelgreifer zum Halten des Kabels (vgl. Fig. 2: Kabelgreifer 6). Eine Abisolierstation 2 zum Ablängen und Abisolieren der Kabel ist ersichtlicherweise auf der Maschinenlängsachse 21 angeordnet. Die weiteren Bearbeitungsstationen 3 und 4 sind hingegen neben der Maschinenlängsachse 21 angeordnet. Zum Zuführen der Kabelenden zu diesen Bearbeitungsstationen muss die Schwenkeinheiten 5 um eine vertikale Achse gedreht werden. Bei der mit 3 bezeichneten Bearbeitungsstation handelt es sich um eine Tüllenstation und bei der mit 4 bezeichneten Bearbeitungsstation handelt es sich um eine Crimpstation. Die Bearbeitungsstationen 3 und 4 sind dabei dem vorauseilenden Kabelende zugeordnet; die Bearbeitungsstationen 3' und 4' dienen zur Konfektionierung der nacheilenden Kabelenden. Die mit 5' bezeichnete zweite als Schwenkeinheit ausgeführten Zuführeinheit befindet sich in Figur 1 in einer ausgeschwenkten Stellung. Zusätzlich oder alternativ wären als Bearbeitungsstationen auch Bestückungsstationen zum Bestücken von Kabelenden mit Steckergehäusen vorstellbar.

Die Kabelbearbeitungseinrichtung 1 weist weiter eine zwischen einer geschlossenen Stellung und einer offenen Stellung bewegbaren Schutzhaube 9 auf, die in der geschlossenen Stellung die Bearbeitungsstationen 2, 3, 4 sowie 2', 3', 4' und die Zuführeinheiten 5, 5' mit den Kabelgreifern abdeckt. In der offenen Stellung wird einen Freiraum geschaffen, über den die Bearbeitungsstationen 2, 3, 4 sowie 2', 3', 4' und die Zuführeinheiten 5, 5' für manuelle Interaktionen zum Bewegen der Kabelgreifer zugänglich sind. Die hier gezeigte Kabelbearbeitungseinrichtung 1 zeichnet sich durch eine neuartige Ausgestaltung im Hinblick auf das Einrichten aus, die nachfolgend anhand der Crimpstation 4 im Detail erläutert wird. Die mit 10 bezeichnete Bedieneinheit dient dabei dazu, den Einrichtvorgang für die Crimpstation 4 durchzuführen.

Wie aus Figur 1 hervorgeht, weist die Kabelbearbeitungseinrichtung 1 weitere Bedieneinheiten 11 und 12 auf. Mit der Bedieneinheit 11, die in Bezug auf die Maschinenlängsachse 21 auf einer zur Bedieneinheit 10 gegenüberliegenden Seite der Kabelbearbeitungseinrichtung 1 angeordnet ist, kann die Abisolierstation 2 eingerichtet werden. Sie kann bei Bedarf aber auch ebenfalls zum Einrichten der Crimpstation 4 verwendet werden. Mit der Bedieneinheit 12 kann die die Crimpstation 4' sowie gegebenenfalls die weiteren dem nacheilenden Kabelende zugeordneten Bearbeitungsstationen eingerichtet werden.

Die Crimpstation 4 enthält eine Crimppresse zum Verbinden eines Kabelendes mit einem Crimpkontakt auf. Die an sich schon bekannte Crimpstation 4 mit einer Crimppresse weist einen mittels eines Motors antreibbaren und in vertikaler Richtung auf und ab bewegbaren Werkzeughalter auf. Zwischen dem Werkzeughalter und einer Konsole der Crimppresse ist ein Crimpwerkzeug eingesetzt. Das Crimpwerkzeug enthält einen Amboss und einen Crimpstempel zum Erstellen der Crimpverbindung. Derartige oder vergleichbare Crimppressen und Crimpwerkzeuge sind dem Fachmann an sich bekannt. Hinsichtlich des Aufbaus und der Wirkungsweise von Crimppresse und Crimpwerkzeugen wird beispielhaft auf die EP 1 341 269 A1 verwiesen.

Für das Crimpen ist es wichtig, dass das vom Kabelgreifer gehaltene zu verarbeitende Kabelende möglichst präzise Crimpstation und genauer ausgedrückt in der Crimppresse zwischen Amboss und Crimpstempel positioniert wird. Dieses Positionieren muss beim Einrichten der Kabelbearbeitungseinrichtung mit der Crimpstation, üblicherweise nach einem Wechsel des Crimpwerkzeuges oder zum Einrichten eines neuen Artikels (neue Kombination von Kabel und Crimpkontakt) vorgenommen werden. Beim hier vorgestellten Einrichten geht es mit anderen Worten darum, die Kabelbearbeitungseinrichtung 1 mit der Crimpstation 4 so vor Beginn des eigentlichen Produktionsprozesses initial einzustellen, dass der Kabelgreifer im Normalbetrieb für die Produktion in die richtige Position verfahren wird, von welcher Position aus das Kabelende des Kabels in der Crimpstation 4 mit einem Crimpkontakt bestückt wird.

Die Zuführeinheit 5 ist derart eingerichtet, dass der Kabelgreifer in einem Einrichtmodus manuell von einem Benutzer zur Crimpstation 4 in die gewünschte Position bewegbar ist. Eine Maschinensteuerung 8 zum Steuern der Kabelbearbeitungseinrichtung 1 ist derart ausgestaltet, dass nachdem die gewünschte Position manuell erstellt worden ist, diese Position bzw. eine dazugehörige Steuergrösse nach Quittierung durch den Benutzer in der Maschinensteuerung 8 abspeicherbar ist. In einem Normalbetriebsmodus wird der Kabelgreifer automatisch angesteuert über die Maschinensteuerung 8 in diese Position gebracht und das vom Kabelgreifer gehaltene Kabelende wird in der Crimpstation 4 gecrimpt.

Dieser Einrichtvorgang erfolgt dabei bei offener Schutzhaube 9. Die Maschinensteuerung 8 ist dabei derart ausgestaltet, dass, wenn die Schutzhaube 9 in der offenen Stellung ist, die Crimpstation 4 und die Zuführeinheit 5 deaktiviert sind und kein Bearbeitungsvorgang zulassen. So können Personenunfälle ausgeschlossen werden.

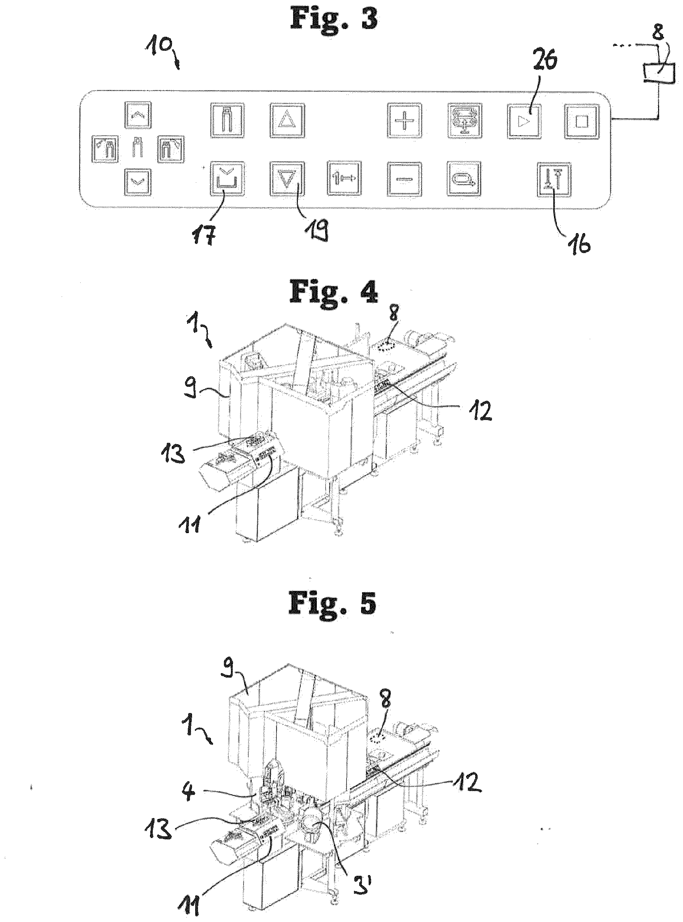

Das manuelle Bewegen der Zuführeinheit 5 mit dem Kabelgreifers kann durch Ziehen, Stossen, Verschwenken und/oder Absenken der Zuführeinheit erfolgen, wobei die Kabelbearbeitungseinrichtung 1 derart ausgestaltet ist, dass die Bewegungen mir nur einer Hand bzw. einhändig durchgeführt werden können. Nachdem die gewünschte Position manuell erstellt worden ist, muss diese Position in der Maschinensteuerung 8 nach Quittierung abgespeichert werden. Zum Abspeichern der Position kann eine Speichertaste zum Einsatz kommen. Eine solche Speichertaste weist die in Figur 3 gezeigte Bedieneinheit 10 für die Kabelbearbeitungseinrichtung 1 auf, welche Speichertaste dort mit 17 bezeichnet ist.

Am zweckmässigsten ist es, wenn Speichertasten 17 an mehreren Stellen an der Maschine angeordnet sind, die es dem Bediener ermöglichen, mit einer Hand den Kabelgreifer zu positionieren und zu halten, während er mit der anderen Hand eine Speichertaste 17 drückt. Vorliegend weist jede der drei Bedieneinheiten 10, 11, 12 eine solche Speichertaste 17 auf, was die Handhabung im Hinblick auf die notwendigen verschiedenen Einrichtvorgänge erheblich erleichtert (siehe nachfolgende Fig. 3; die Bedieneinheiten 11 und 12 weisen dabei einen gleichartigen Aufbau wie die Bedieneinheit 10 auf).

Figur 2 zeigt eine Zuführeinheit 5 der Kabelbearbeitungseinrichtung 1. Die Zuführeinheit umfasst zum Bewegen des Kabelgreifers 6 mit Encodern ausgerüstete Servo- oder Schrittmotoren 14, 15 auf. Die Encoder sind derart mit der Maschinensteuerung 8 verbunden, dass mittels der Encoder die Position des Kabelgreifers 6 nach dem manuellen Bewegen im Einrichtmodus ermittelbar ist.

Da der Bediener die korrekte Position des Kabelendes relativ zur Bearbeitungsstation einstellt, indem er den Kabelgreifer 6 von Hand bei geöffneter Schutzhaube 9 bewegt, soll die Maschinensteuerung 8 die Position des Kabelgreifers 6 während dieser Bewegung feststellen können. Die dazu notwendige Sensorik ist bereits vorhanden, da diese auch zur Positionsregelung oder -ansteuerung beim automatischen Bewegen der Schwenkeinheit 5 im Normalbetrieb benötigt wird. Konkret kann beispielhaft die Zuführeinheit 5 einen ersten Motor 14 aufweisen, der einen Schlitten 22 über Ritzel- und Zahnstangenanordnung 23 bewegt, was den Radius einer Polarkoordinate für den Kabelgreifer 6 ergibt. Der Kabelgreifer 6 ist an einem vorderen Ende eines Greiferarms 27 angeordnet, wobei der Greiferarm 27 am Schlitten 22 angebracht ist. Ein zweiter Motor 15 schwenkt mit einem Zahnriemen 24 eine Drehscheibe und bestimmt so den Winkel der Polarkoordinate für den Kabelgreifer 6. Beide Motoren 14, 15 verfügen über Encoder aus deren Winkelstellungen sich die Lage des Kabelgreifers berechnen lässt.

Das manuelle Bewegen zum Einstellen der richtigen Position des Kabelgreifers 6 lässt sich auch basierend auf anderen Bewegungsmechanismen für den Kabelgreifer realisieren und es können auch andere Messsysteme zum Ermitteln der Position angewendet werden, sofern vorteilhaft die Antriebe nicht selbsthemmend (wie zum Beispiel bei Gewindespindeln) ausgeführt sind. Das oben beschriebene Konzept lässt sich auch für sogenannte Transfermaschinen anwenden. Ein weiter bekannter Typ von Kabelbearbeitungseinrichtungen sind die. Die sogenannten "Transfermaschinen" oder "Linearmaschinen" sind Kabelbearbeitungsmaschinen, bei denen die jeweiligen Kabelbearbeitungsstationen auf einer Linie entlang der Maschinenhauptachse angeordnet sind. Eine derartige Kabelbearbeitungseinrichtung vom Typ Transfermaschine ist zum Beispiel aus der EP 1 073 163 A1 bekannt geworden.

Die kritischen Aktoren, diese umfassen mindestens die Motoren 14, 15 für die Bewegungen der Schwenkeinheiten 5, 5' mit den Kabelgreifern 6, die Motoren für die Crimppresse der Crimpstationen 4, 4', sowie vorteilhaft die Motoren für den Antrieb des Schneidkopfes der Abisolierstationen 2 und besonders vorteilhaft alle Aktoren der Kabelbearbeitungseinrichtung 1 werden bei geöffneter Schutzhaube durch die Maschinensteuerung 8 stromlos geschaltet (kein Drehmoment auf den Motoren). Dadurch können bei offener Schutzhaube 9 keine Bewegungen, auch nicht im Kriechgang mit der Schwenkarmen, dem Schneidkopf und den Crimppressen ausgeführt werden. Falls als gefährlich eingestufte pneumatische Bewegungen bei den Prozessmodulen vorliegen, können diese Aktoren ebenfalls abgeschaltet werden (kein Druck auf den Schaltventilen).

Figur 3 zeigt eine Bedieneinheit 10, die ausser der Speichertaste 17 zum Speichern der nach dem manuellen Bewegen erreichten Position des Kabelgreifers noch eine Reihe weiterer Tasten aufweist. Die Bedieneinheit umfasst 10 eine Haubentaste 16 zum Bedienen der Schutzhaube 9, mittels welcher die Schutzhaube 9 geöffnet und/oder geschlossen werden kann. Die Haubentaste 16 ist derart mit der Maschinensteuerung 8 verbunden, dass bei der Haubentaste 16 die Schutzhaube 9 von der geschlossenen Stellung in die offene Stellung gebracht wird und dass dabei der Einrichtmodus erstellt wird. Zum Bewegen der Schutzhaube 9 sind entsprechende (hier nicht dargestellte) Antriebe vorgesehen. Aufgrund des höheren Gefährdungspotentials ist zum Schliessen der Schutzhaube 9 ein zusätzliches Sicherheitsmerkmal vorgesehen. Neben der Haubentaste 16 ist eine weitere Taste 19 vorgesehen, mit der bestätigbar ist, dass die Schutzhaube 9 von der offenen Stellung in die geschlossene Stellung gebracht werden soll. Die Taste 19 wird daher nachfolgend als "Haube schliessen-Taste" bezeichnet. Die Haubentaste 16 und die Haube schliessen-Taste 19 sind mit der Maschinensteuerung 10 verbunden und die Maschinensteuerung 10 ist konfiguriert, dass nur bei gleichzeitigem Drücken beider Tasten 16 und 19 die Schutzhaube 9 von der offenen Stellung in die geschlossene Stellung gebracht werden kann. Die Haubentaste 16 und die Haube schliessen-Taste 19 sind für die Zweihandbedienung um wenigstens 27 cm voneinander entfernt, wodurch verhindert wird, dass eine Hand des Benutzers im Gefahrenbereich innerhalb der Schutzhabe verbleiben könnte.

Im vorliegenden Ausführungsbeispiel wird das Speichern der Position des Kabelgreifers beim Einrichten mittels Speichertasten 17 ausserhalb der Schutzhaube 9 bewerkstelligt. Es ist jedoch auch denkbar, solche Speichertasten lokal an der Zuführeinheit oder den Bearbeitungsstationen anzuordnen. Die Kabel- oder Greiferposition könnte anstelle von Tasten aber auch mit anderen Mitteln gespeichert werden, beispielsweise über eine gegebenenfalls ohnehin schon vorhandene Bedieneroberfläche der Maschinensteuerung (z.B. Computermaus, Tastatur oder Touchfunktion), mit einem Sensor, der das Absenken des Kabelgreifers von Hand erkennt oder akustisch über Stimmenerkennung.

Die Figuren 4 und 5 zeigen die Kabelbearbeitungseinrichtung 1 mit Schutzhaube 9 in geschlossener Stellung (Fig. 4) und mit Schutzhaube 9 in offener Stellung (Fig. 5). Das Verfahren zum Einrichten der Kabelbearbeitungseinrichtung 1 verläuft in Bezug auf die Crimpstation 4 wie folgt ab: Der Bediener kann der Maschinensteuerung 8 angeben, dass ein Kabel der Crimpstation 4 mit der Crimppresse 7 zugeführt werden soll. Dazu drückt er beispielsweise eine sogenannte Kabelruftaste, worauf das Kabel zur Crimpstation 4 hin geführt wird. Das Kabel wird nach Aktivieren des Zuführvorgangs bei Bedarf abgelängt und abisoliert. Die Zuführeinheit 5 bringt das Kabelende vor die Crimppresse der Crimpstation 4 und stoppt an einer vordefinierten oder der letzten gespeicherten Position. Nun kann der eigentliche Einrichtvorgang, der vorgängig schon wenigstens teilweise umschrieben worden ist, beginnen. Der Bediener öffnet mit der Haubentaste 16 die Schutzhaube 9, wodurch Kabelbearbeitungseinrichtung 1 in den Einrichtmodus versetzt wird und die Maschinensteuerung 10 die elektromotorischen Aktoren der Kabelbearbeitungseinrichtung 1 stromlos und/oder die pneumatischen Aktoren der Kabelbearbeitungseinrichtung 1 drucklos schaltet. Danach bewegt der Bediener die Zuführeinheit 5 mit dem Kabelgreifer 6 von Hand so, bis das Kabelende die gewünschte Position relativ zur Crimpstation oder einer anderen Bearbeitungsstation einnimmt. Falls nötig kann er den Kabelgreifer 6 von Hand absenken. Die Maschinensteuerung 8 berechnet während diesem manuellen Positioniervorgang laufend aus den Encoderdaten die Polarkoordinaten der Greiferposition bzw. der Position des Kabelendes und stellt die Position des Kabelgreifers 6 gegebenenfalls auf einem Bildschirm oder einer anderen Anzeige der Bedieneinheit 10, 11, 12 oder der Bedienkonsole 25 dar. Zum Abschliessen des Positioniervorgangs drückt der Bediener die Speichertaste 17. Danach kann er die Schutzhaube 9 durch Drücken von Tasten schliessen. Danach kann ein Crimpvorgang oder je nach eingerichteter Bearbeitungsstation auch ein anderer Bearbeitungsvorgang testweise durchgeführt werden oder allenfalls sogar direkt mit der normalen Fertigung konfektionierter Kabel gestartet werden. Ein solcher Testlauf kann zum Beispiel automatisch gestartet werden, sobald die Schutzhaube 9 geschlossen ist, oder der Testlauf kann durch Eingabemittel wie eine Starttaste 26 gestartet werden.

## Patentansprüche

1. Kabelbearbeitungseinrichtung (1) zum Konfektionieren von Kabeln mit wenigstens einer und vorzugsweise mehrerer Bearbeitungsstationen (2, 3, 4), einer einen Kabelgreifer (6) umfassenden Zuführeinheit (5) zum Zuführen eines Kabelendes des Kabels zu einer der Bearbeitungsstationen (2, 3, 4) und einer Maschinensteuerung (8) zum Steuern der Kabelbearbeitungseinrichtung (1), **dadurch gekennzeichnet, dass** die Zuführeinheit (5) derart eingerichtet ist, dass der Kabelgreifer (6) in einem Einrichtmodus manuell zu einer der Bearbeitungsstationen (2, 3, 4) in eine gewünschte Position bewegbar ist und dass die Maschinensteuerung (8) derart ausgestaltet ist, dass nachdem die gewünschte Position manuell erstellt worden ist, diese Position in der Maschinensteuerung (8) abspeicherbar ist oder abgespeichert wird.

2. Kabelbearbeitungseinrichtung (1) nach Anspruch 1, **dadurch gekennzeichnet, dass** zum Bewegen des Kabelgreifers (6) im Normalbetriebsmodus die Zuführeinheit (5) mit Encodern ausgerüstete Servo- oder Schrittmotoren (14, 15) aufweist, mittels welcher der Kabelgreifer (6) zu einer der Bearbeitungsstationen (2, 3, 4) bewegbar ist und dass die Encoder derart mit der Maschinensteuerung (8) verbunden sind, dass mittels der Encoder die Position des Kabelgreifers (6) nach dem manuellen Bewegen im Einrichtmodus ermittelbar ist.

3. Kabelbearbeitungseinrichtung (1) nach Anspruch 1 oder 2, **dadurch gekennzeichnet, dass** die Kabelbearbeitungseinrichtung (1) eine zwischen einer geschlossenen Stellung und einer offenen Stellung bewegbaren Schutzhaube (9) aufweist, die in der geschlossenen Stellung die wenigstens eine Bearbeitungsstation (2, 3, 4) und die Zuführeinheit (5) mit dem Kabelgreifer (6) abdeckt und die in der offenen Stellung einen Freiraum schafft, über den die Bearbeitungsstation (2, 3, 4) und die Zuführeinheit (5) für manuelle Interaktionen zum Bewegen des Kabelgreifers (6) zugänglich ist, wobei die Maschinensteuerung (8) derart ausgestaltet ist, dass, wenn die Schutzhaube (9) in der offenen Stellung ist, die wenigstens eine Bearbeitungsstation (2, 3, 4) und die Zuführeinheit (5) deaktiviert sind und kein Bearbeitungsvorgang zulassen oder die Maschinensteuerung (8) die Aktoren zum Betreiben der wenigstens einen Bearbeitungsstation (2, 3, 4) und der Zuführeinheit (5) stromlos schaltet.

4. Kabelbearbeitungseinrichtung (1) nach Anspruch 3, **dadurch gekennzeichnet, dass** sie eine Bedieneinheit (10, 11, 12) mit einer Haubentaste (16) zum Bedienen der Schutzhaube (9) umfasst, wobei die Haubentaste (16) derart mit der Maschinensteuerung (8) verbunden ist, dass bei oder nach Betätigung der Haubentaste (16) der Einrichtmodus automatisch erstellbar ist.

5. Kabelbearbeitungseinrichtung (1) nach einem der Ansprüche 1 bis 4, **dadurch gekennzeichnet, dass** die Bedieneinheit (10, 11, 12) neben einer Haubentaste (16) zum Bedienen der Schutzhaube (9) eine weitere Taste (19) aufweist, mit der bestätigbar ist, dass die Schutzhaube (9) von der offenen Stellung in die geschlossene Stellung gebracht werden soll.

6. Kabelbearbeitungseinrichtung (1) nach Anspruch 5, **dadurch gekennzeichnet, dass** die Haubentaste (16) und die Taste (19) zum Bestätigen des Haubenschliessvorgangs derart mit der Maschinensteuerung (10) verbunden sind, dass nur bei gleichzeitigem Drücken beider Tasten die Schutzhaube (9) von der offenen Stellung in die geschlossene Stellung gebracht werden kann.

7. Kabelbearbeitungseinrichtung (1) nach einem der Ansprüche 1 bis 6, **dadurch gekennzeichnet, dass** sie eine Bedieneinheit (10, 11, 12) mit einer Speichertaste (17) zum Speichern der nach dem manuellen Bewegen erreichten Position des Kabelgreifers (6) aufweist.

8. Kabelbearbeitungseinrichtung (1) nach Anspruch 7, **dadurch gekennzeichnet, dass** sie mehrere jeweils eine Speichertaste (17) umfassende Bedieneinheiten (10, 11, 12) umfasst.

9. Kabelbearbeitungseinrichtung (1) nach Anspruch 8, **dadurch gekennzeichnet, dass** sie zwei Gruppen von Bearbeitungsstationen (2, 3, 4; 2', 3', 4'), wobei eine erste Gruppe einem vorauseilenden und eine zweite Gruppe einem nacheilenden Kabelende des Kabels (20) zugeordnet sind, wobei jeder der beiden Gruppen je wenigstens eine Bedieneinheit (10, 11, 12) zugeordnet ist.

10. Kabelbearbeitungseinrichtung (1) nach einem der Ansprüche 1 bis 9, **dadurch gekennzeichnet, dass** sie als Bearbeitungsstation eine Crimpstation (4, 4') umfasst, zu der der Kabelgreifer (6) im Einrichtmodus manuell bewegbar ist.

11. Verfahren zum Einrichten einer Kabelbearbeitungseinrichtung zum Konfektionieren von Kabeln mit wenigstens einer Bearbeitungsstation (2, 3, 4), und einer einen Kabelgreifer (6) umfassenden Zuführeinheit (5) zum Zuführen eines Kabelendes des Kabels (20) zur wenigstens einen Bearbeitungsstationen (2, 3, 4), insbesondere einer Kabelbearbeitungseinrichtung (1) nach einem der Ansprüche 1 bis 10, umfassend die Schritte:
- Versetzen der Kabelbearbeitungseinrichtung (1) in einen Einrichtmodus,
- manuelles Bewegen der Zuführeinheit (5) mit dem Kabelgreifer (6) bis der Kabelgreifer (6) eine gewünschte Position in der Bearbeitungsstation (2, 3, 4) erreicht,
- Abspeichern der Position des Kabelgreifers (6), wobei die abgespeicherte Position für einen Normalbetriebsmodus verwendet wird.

12. Verfahren nach Anspruch 11, **dadurch gekennzeichnet, dass** nach dem Abspeichem der Position des Kabelgreifers (6) testweise ein einzelner Bearbeitungsvorgang durchgeführt wird und dass das so bearbeitete Kabelende des Kabels (20) visuell geprüft wird, indem die Zuführeinheit (5) mit dem Kabelgreifer (6) zum Benutzer hin bewegt wird.

13. Verfahren nach Anspruch 11 oder 12, **dadurch gekennzeichnet, dass** die Kabelbearbeitungseinrichtung (1) beim Öffnen einer die die wenigstens eine Bearbeitungsstation (2, 3, 4) und die Zuführeinheit (5) mit dem Kabelgreifer (6) abdeckenden Schutzhaube (9) in den Einrichtmodus versetzt wird.
